(19) Europäisches Patentamt
European Patent Office
Office européen des brevets

(11) EP 1 473 311 A1

(12) EUROPEAN PATENT APPLICATION

(43) Date of publication:
03.11.2004 Bulletin 2004/45

(51) Int Cl.[7]: C08F 290/04, C09D 151/00

(21) Application number: 04252230.0

(22) Date of filing: 16.04.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(30) Priority: 29.04.2003 US 466385

(71) Applicant: ROHM AND HAAS COMPANY
Philadelphia, Pennsylvania 19106-2399 (US)

(72) Inventors:
- Solomon, Robert David
Souderton, Pennsylvania 18964 (US)
- Even, Ralph Craig
Pennsylvania, 19422 (US)
- Lau, Willie
Lower Gwynedd, Pennsylvania 19002 (US)
- Fasano, David Michael
Maple Glen, Pennsylvania, 19002 (US)
- Bromm, Karl Allen
Forest Grove, Pennsylvania 18922 (US)

(74) Representative: Kent, Venetia Katherine et al
Rohm and Haas (UK) Ltd
European Patent Department
28th. Floor, City Point
One Ropemaker Street
London EC2Y 9HS (GB)

# (54) Aqueous polymer composition and coating produced therefrom

(57) An aqueous polymer composition including a plurality of comb copolymer particles is disclosed. The comb copolymer particles contain comb copolymer having a polymer backbone with at least one attached graft segment. The polymer backbone and the at least one graft segment have select compositional ranges and select glass transition temperature ranges. Further, the comb copolymer contains as a polymerized unit at least one select monomer such as, aldehyde reactive group-containing monomer or certain styrenic monomers. The aqueous polymer composition of the present invention is useful for preparing coatings having one or more improved properties such as dirt pickup resistance, gloss, gloss retention, alkyd adhesion, and tint retention. A method for forming a coated substrate from the aqueous polymer composition of this invention is also provided.

EP 1 473 311 A1

## Description

The present invention generally relates to an aqueous polymer composition. In particular, the aqueous polymer composition includes a plurality of comb copolymer particles. The comb copolymer particles contain comb copolymer having a polymer backbone with at least one attached graft segment. The comb copolymer has select compositional ranges and select glass transition temperature ranges for the polymer backbone and the graft segment. Further, the comb copolymer contains as a polymerized unit at least one select monomer. The aqueous polymer composition of the present invention is useful for preparing coatings having one or more improved properties such as dirt pickup resistance, gloss, gloss retention, alkyd adhesion, and tint retention. A method for forming a coated substrate from the aqueous polymer composition of this invention is also provided.

Aqueous coating compositions, such as paints, commonly contain polymer particles as binders. Upon application and drying of the aqueous coating composition, the binder polymer particles coalesce to form a continuous dried film or coating, thus binding the dried film together as well as adhering the dried film to an underlying substrate. The composition and the physical properties of the binder, as well as the film formation process, partly determine the physical characteristics of the coating. Examples of binder physical properties include the glass transition temperature, the minimum film formation temperature, and the molecular weight.

Increasing the glass transition temperature of the binder will increase the hardness of the resulting coating. The hardness of a coating is important because it improves other desirable properties, such as block resistance, print resistance, dirt pickup resistance, scrub resistance, and mar resistance. However, increasing the hardness of the binder adversely affects other properties such as flexibility of the coating, adhesion to a substrate, and the minimum film formation temperature of the binder. As the glass transition temperature of the binder increases, the minimum temperature required for the binder to form a film, referred to herein as the "minimum film formation temperature" is also increased. If a binder is selected for its ability to contribute hardness to the coating, but the coating will not form a film at the temperatures at which it is to be applied, the aqueous coating composition is not useful. Therefore, it is often necessary to add a coalescent to the aqueous coating composition. A coalescent is an organic solvent that lowers the minimum film formation temperature of a polymer, thereby permitting the binder to form a useful film at a temperature below the glass transition temperature of the binder. During and after the drying of an aqueous coating composition that contains a coalescent, the organic solvents evaporate and enter into the atmosphere. In addition to the unpleasant odor associated with organic solvents, there is growing concern about the potentially adverse effects of these organic solvents, in particular, their role in air pollution.

There is a continuing need for aqueous coating compositions that are useful for preparing coatings having a balance of hardness properties including acceptable scrub resistance and softness properties including acceptable adhesion. Further, it is desired that this aqueous coating composition may be provided with either low levels of coalescent, or absent of coalescent.

The patent application, WO 02/22750 A2 discloses an aqueous composition containing comb copolymers that display an improved balance of properties related to hardness and softness. The disclosed comb copolymers include a backbone and at least one graft segment attached to the backbone. Disclosed compositions include comb copolymers containing from 10 to 98 weight % backbone and from 2 to 90 weight % of at least one graft segment. Further, the disclosed glass transition temperatures for the backbone are in the range of from -90 °C to 50 °C; and for the at least one graft segment in the range of from 30 °C to 130 °C. However, this reference does not disclose an aqueous composition having acceptable adhesion to a substrate, in particular, to the surface of a dried alkyd paint film.

Aqueous coating compositions are commonly applied onto previously painted surfaces. Desired are aqueous coating compositions that have an acceptable balance of hard and soft properties as well as acceptable adhesion onto previously painted substrates such as alkyd paint film.

We have surprisingly found an aqueous polymer composition containing certain comb copolymers that is useful for preparing dried films having improved adhesion to previously painted substrates. The aqueous polymer composition also can provide improved scrub resistance. The certain comb copolymers have select ranges of composition and select glass transition temperatures. Further, the aqueous polymer composition of this invention may be provided as a low or zero volatile organic compound containing composition.

According to the first aspect of the present invention, an aqueous polymer composition is provided including a plurality of comb copolymer particles: wherein the comb copolymer particles contain comb copolymer; wherein the comb copolymer contains, based on weight of the comb copolymer: from 75 to 98 weight % of a polymer backbone having a glass transition temperature in the range of from -65 °C to 30 °C; and from 2 to 25 weight % of at least one graft segment having a glass transition temperature of at least 40 °C attached thereto; and wherein the comb copolymer contains as a polymerized unit at least one select monomer selected from aldehyde reactive group-containing monomer; styrenic monomer having at least one ortho-, meta-, or para-alkyl group; or combinations thereof.

A second aspect of the present invention provides a process for preparing an aqueous polymer composition containing particles of comb copolymer, including the steps of: providing an aqueous macromonomer emulsion containing macromonomer dispersed an aqueous medium, wherein the macromonomer has a glass transition temperature of at least 40 °C; polymerizing the macromonomer in the presence of at least one first ethylenically unsaturated monomer and at least one select monomer selected from aldehyde reactive group-containing monomer, styrenic monomer having at least one ortho-, meta-, or para-alkyl group, or combinations thereof, to provide the particles of the comb copolymer; wherein the comb copolymer contains as polymerized units, based on weight of the comb copolymer: from 2 to 25 weight % of the macromonomer; and from 75 to 98 weight % of the at least one first ethylenically unsaturated monomer and the at least one select monomer, wherein a polymer including as polymerized units the at least one first ethylenically unsaturated monomer and the at least one select monomer has a glass transition temperature in the range of from -65 °C to 30 °C.

A third aspect of the present invention provides an aqueous polymer composition including a plurality of comb copolymer particles: wherein the comb copolymer particles contain comb copolymer; wherein the comb copolymer contain, based on weight of the comb copolymer: from 80 to 99.75 weight % of a polymer backbone having a glass transition temperature in the range of from - 65 °C to 40 °C; and from 0.25 to 20 weight % of at least one select graft segment attached thereto; wherein the select graft segment contains as polymerized units from 5 to 100 weight % aldehyde reactive group-containing monomer, based on weight of the select graft segment.

A fourth aspect of the present invention provides a process for preparing an aqueous polymer composition containing particles of comb copolymer, including the steps of: providing an aqueous macromonomer emulsion containing macromonomer dispersed an aqueous medium, wherein the macromonomer contains as polymerized units from 5 to 100 weight % aldehyde reactive group-containing monomer, based on weight of the macromonomer; polymerizing the macromonomer in the presence of at least one first ethylenically unsaturated monomer and optionally, at least one select monomer selected from aldehyde reactive group-containing monomer, styrenic monomer having at least one ortho-, meta-, or para-alkyl group, or combinations thereof, to provide the particles of the comb copolymer; wherein the comb copolymer contains as polymerized units, based on weight of the comb copolymer: from 0.25 to 20 weight % of the macromonomer; and from 80 to 99.75 weight % of the at least one first ethylenically unsaturated monomer and optionally, the at least one select monomer; wherein a polymer containing the at least one select monomer and optionally, the at least one select monomer, has a glass transition temperature in the range of from -65 °C to 30 °C.

A fifth aspect of the present invention provides a method for forming a coated substrate including the steps of: providing an aqueous polymer composition containing particles of comb copolymer dispersed in an aqueous medium; wherein the comb copolymer contains, based on weight of the comb copolymer: from 75 to 98 weight % of a polymer backbone having a glass transition temperature in the range of from -65 °C to 30 °C; and from 2 to 25 weight % of at least one graft segment having a glass transition temperature of at least 40 °C attached thereto; and wherein the comb copolymer contains as a polymerized unit at least one select monomer selected from aldehyde reactive group-containing monomer; styrenic monomer having at least one ortho-, meta-, or para-alkyl group; or combinations thereof; applying the aqueous polymer composition onto a substrate; and drying or allowing to dry the aqueous polymer composition applied onto the substrate to provide the coated substrate.

Glass transition temperature" or "$T_g$" as used herein, means the temperature at or above which a glassy polymer will undergo segmental motion of the polymer chain. Glass transition temperatures of a polymer can be estimated by the Fox equation *[Bulletin of the American Physical Society* **1**, 3 Page 123 (1956)] as follows:

$$\frac{1}{T_g} = \frac{w_1}{T_{g(1)}} + \frac{w_2}{T_{g(2)}}$$

For a copolymer, $w_1$ and $w_2$ refer to the weight fraction of the two comonomers, and $T_{g(1)}$ and $T_{g(2)}$ refer to the glass transition temperatures of the two corresponding homopolymers in Kelvin. For polymers containing three or more monomers, additional terms are added ($w_n/T_{g(n)}$. The $T_g$ of a polymer phase can also be calculated by using the appropriate values for the glass transition temperatures of homopolymers, which may be found, for example, in "Polymer Handbook", edited by J. Brandrup and E. H. Immergut, Interscience Publishers. The values of Tg reported herein are calculated using the Fox equation.

As used herein, the use of the term "(meth)" followed by another term such as acrylate refers to both acrylates and methacrylates. For example, the term "(meth)acrylate" refers to either acrylate or methacrylate; the term "(meth) acrylic" refers to either acrylic or methacrylic; and the term "(meth)acrylamide" refers to either acrylamide or methacrylamide.

As used herein, the term "homopolymer" refers to a polymer containing one type of monomer as polymerized units.

As used herein, term "copolymer" refers to a polymer containing two or more different types of monomers as polymerized units. The arrangement of the polymerized monomer units in the copolymer may be random or nonrandom.

Nonrandom copolymers include block copolymers and alternating copolymers.

The aqueous polymer composition of this invention contains a plurality of comb copolymer particles dispersed in an aqueous medium. The comb copolymer particles contain comb copolymer having a polymer backbone with at least one graft segment attached to the polymer backbone. The comb copolymer contains as polymerized units, at least one select monomer.

The polymer backbone is a polymer chain containing polymerized ethylenically unsaturated monomer units attached to one another. The polymerized monomer units forming the polymer backbone occupy either "nonterminal" positions or "terminal" positions in the polymer backbone. A nonterminal polymerized monomer unit is directly attached to at least two other polymerized monomer units. A terminal polymerized monomer unit resides at the end of the polymer chain and is directly attached to one other polymerized monomer unit. The polymer backbone is a homopolymer or a copolymer. The polymer backbone is a linear polymer or alternatively, a branched polymer. A linear polymer has a backbone that is characterized as having two terminal polymerized monomers units. A branched polymer has a backbone that is characterized by having more than one backbone segment and an extra terminal polymerized monomer unit for each extra backbone segment. For example, a branched polymer having four backbone segments contains five terminal polymerized monomer units. The branch segments of a branched polymer contain the same or similar average compositions of polymerized monomer; and the same or similar distribution of the polymerized monomers within the branches.

The comb copolymer contains at least one graft segment covalently attached to the polymer backbone. The graft segment is a polymer chain occupying a pendant position along the polymer backbone. The graft segment is a homopolymer chain, which is formed from a single type of monomer; or a copolymer chain, which is formed from two or more different types of monomers. The composition of the graft segment is different from the composition of the backbone polymer to which it is attached. This is, in contrast to the branch segment of a branched polymer which has a composition that is the same as, or similar to, other branch segments of the branched polymer. The graft segment is attached to the polymer backbone at a terminal position and is referred to as a "terminal graft segment"; or at a nonterminal position and is referred to as a "nonterminal graft segment".

In the first aspect of the invention, the comb copolymer included in the aqueous polymer composition of this invention contains a polymer backbone having a glass transition temperature in the range of from -65 °C to 30 °C, preferably in the range of from -45°C to 20 °C, and more preferably, in the range of from -30 °C to 10 °C. The comb copolymer contains from 75 to 98 weight % of the polymer backbone, preferably, from 80 to 95 weight % polymer backbone, and more preferably, from 85 to 90 weight % polymer backbone, based on the weight of the comb copolymer. The comb copolymer also contains at least one graft segment having a glass transition temperature of at least 40 °C, preferably at least 45 °C, and more preferably at least 50 °C. The comb copolymer includes from 2 to 25 weight %, preferably, from 5 to 20 weight %, and more preferably, from 10 to 15 weight % of the at least one graft segment, based on the weight of the comb copolymer.

The weight average molecular weight of the comb copolymer is generally at least 25,000, preferably in the range of from 50,000 to 2,000,000, preferably in the range of from 75,000 to 1,500,000, and more preferably in the range of from 100,000 to 1,000,000. The degree of polymerization of the graft segments is typically in the range of from 5 to 1,000, preferably in the range of from 10 to 1,000, more preferably in the range of from 10 to 500, and most preferably in the range of from 20 to 300. The degree of polymerization is the number of polymerized units of ethylenically unsaturated monomer contained in the graft segment. The weight average molecular weight of the graft segments are generally in the range of from 400 to 100,000, more preferably in the range of from 1,000 to 50,000, and more preferably in the range of from 2,000 to 35,000.

The comb copolymer particles contained in the aqueous polymer composition of this invention typically have an average diameter, referred to herein, as "particle size", in the range of from 60 nanometer (nm) to 500 nm, preferably in the range of from 80 nm to 350 nm, and more preferably in the range of from 100 nm to 250 nm.

The backbone polymer and the at least one graft segment included in the comb copolymer are formed from ethylenically unsaturated monomers, referred to herein as "first monomers". Suitable first monomers include (meth) acrylate esters, such as $C_1$ to $C_{18}$ normal or branched alkyl esters of (meth)acrylic acid, including methyl (meth)acrylate, ethyl (meth)acrylate, n-butyl (meth)acrylate, lauryl (meth)acrylate, stearyl (meth)acrylate, and 2-ethylhexyl (meth)acrylate; styrene; substituted styrenes, such as $\alpha$-methyl styrene; olefinically unsaturated nitriles, such as (meth)acrylonitrile; olefinically unsaturated halides, such as vinyl chloride, vinylidene chloride or vinyl fluoride; vinyl esters of organic acids, such as vinyl acetate; N-vinyl compounds such as N-vinyl pyrrolidone; (meth)acrylamide; substituted (meth) acrylamides; hydroxyalkyl (meth)acrylates such as hydroxyethyl (meth)acrylate; basic substituted (meth)acrylates and (meth)acrylamides such as amine-substituted (meth)acrylates including dimethylaminoethyl (meth)acrylate, tertiary-butylaminoethyl methacrylate and dimethylaminopropyl methacrylamide; glycidal containing monomers such as glycidal (meth)acrylate; and the like. Other suitable first monomers are acid containing monomers including carboxylic acid monomers such as (meth)acrylic acid, itaconic acid, fumaric acid, and maleic acid; anhydride containing monomers such as maleic anhydride; (meth)acryloxypropionic acid; sulfur containing acid monomers such as styrene sulfonic

acid, sodium vinyl sulfonate, sulfoethyl (meth)acrylate, ethylmethacrylate-2-sulphonic acid, and 2-acrylamido-2-methylpropane sulphonic acid; phosphorus containing acid monomers such as phosphoethyl (meth)acrylate; the corresponding salts of the acid containing monomer; or combinations thereof.

The comb copolymer also contains at least one select monomer as a polymerized unit in the polymer backbone, in the graft segment, or in both the polymer backbone and the graft segment. In a comb copolymer containing more than one graft segment, the polymerized select monomer may be contained in one or more of the graft segments. Examples of the at least one select monomer includes aldehyde reactive group-containing monomers, styrenic monomers having at least one ortho-, meta-, or para-alkyl group; and combinations thereof. The comb copolymer typically contains as polymerized units, from 0.1 to 20 weight %, preferably from 0.5 to 15 weight %, and more preferably, from 1 to 10 weight % of the at least one select monomer, based on the weight of the comb copolymer.

The aldehyde reactive group-containing monomer is a monomer that, in a homogeneous solution containing 20% by weight of the monomer and an equimolar amount of formaldehyde at any pH from 1 to 14, will exhibit greater than 10% extent of reaction between the monomer and formaldehyde on a molar basis in one day at 25 °C. Included as aldehyde reactive group-containing monomers are, for example, vinyl acetoacetate, acetoacetoxyethyl (meth)acrylate, acetoacetoxypropyl (meth)acrylate, allyl acetoacetate, acetoacetoxybutyl (meth)acrylate, 2,3-di(acetoacetoxy) propyl (meth)acrylate, vinyl acetoacetamide, acetoacetoxyethyl (meth)acrylamide, 3-(2-vinyloxyethylamino)-propionamide, N-(2-(meth)acryloxyethyl)-morpholinone-2, 2-methyl-1-vinyl-2-imidazoline, 2-phenyl-1-vinyl-2-imidazoline, 2-(3-oxazolidinyl)ethyl (meth)acrylate, N-(2-vinoxyethyl)-2-methyloxazolidine, 4,4-dimethyl-2-isopropenyloxazoline, 3-(4-pyridyl)propyl (meth)acrylate, 2-methyl-5-vinyl-pyridine, 2-vinoxyethylamine, 2-vinoxyethylethylene-diamine, 3-aminopropyl vinyl ether, 2-amino-2-methylpropyl vinyl ether, 2-aminobutyl vinyl ether, tert-butylaminoethyl (meth) acrylate, 2-(meth)acryloxyethyldimethyl-β-propiobetaine, diethanolamine monovinyl ether, o-aniline vinyl thioether, (meth)acryloxyacetamidoethylethyleneurea, ethyleneureidoethyl (meth)acrylate, (meth)acrylamidoethylethyleneurea, (meth)acrylamidoethyl-ethylenethiourea, N-((meth)acrylamidoethyl)-$N^1$-hydroxymethylethyleneurea, N-((meth)acrylamidoethyl)-$N^1$-methoxymethylethyleneurea, N-formamidoethyl-$N^1$-vinylethyleneurea, N-vinyl-$N^1$-aminoethyl-ethyleneurea, N-(ethyleneureidoethyl)-4-pentenamide, N-(ethylenethioureido-ethyl)-10-undecenamide, butyl ethyleneureido-ethyl fumarate, methyl ethyleneureidoethyl fumarate, benzyl N-(ethyleneureido-ethyl) fumarate, benzyl N-(ethyleneureido-ethyl) maleamate, N-vinoxyethylethylene-urea, N-(ethyleneureidoethyl)-crotonamide, ureidopentyl vinyl ether, 2-ureidoethyl (meth)acrylate, N-2-(allylcarbamoto)aminoethyl imidazolidinone, 1-(2-((20hydroxy-3-(2-propenyloxy)propyl)amino)ethyl)-2-imidazolidinone, hydrogen ethyleneureidoethyl itaconamide, ethyleneureidoethyl hydrogen itaconate, bis-ethyleneureidoethyl itaconate, ethyleneureidoethyl undecylenate, ethyleneureidoethyl undecylenamide, 2-(3-methylolimidazolidone-2-yl-1)ethyl acrylate, N-acryloxyalkyl oxazolidines, acylamidoalkyl vinyl alkyleneureas, aldehyde-reactive amino group-containing monomers as dimethyaminoethyl methacrylate, and ethylenically unsaturated monomers containing aziridine functionality.

The comb copolymer containing as a polymerized unit at least one aldehyde reactive group-containing monomer may also be prepared by a post polymerization reaction in which a comb copolymer containing a reactive functionality that is not reactive with aldehydes, is reacted with second reactive material. The reaction of the first reactive functionality with the second reactive material provides a comb copolymer having copolymerized aldehyde reactive group-containing monomer equivalent. By "copolymerized aldehyde reactive group-containing monomer equivalent" is meant herein the copolymerized monomer that would have led to the comb copolymer having polymerized aldehyde reactive group-containing monomer even though the comb copolymer was formed by a post-polymerization reaction rather than directly formed by the copolymerization of the monomer or the macromonomer. For example, a comb copolymer containing carboxylic acid functionality is reacted with a compound including an aziridine (ethyleneimine) ring or rings to provide the comb copolymer having at least one aldehyde reactive group-containing monomer as a polymerized unit. The aziridine ring in the compound may be substituted on the nitrogen, one or both carbons, or combinations thereof. Examples of compounds having an aziridine ring include, for example, ethyleneimine, propyleneimine, N-(2-hydroxyethyl) ethyleneimine, trimethylolpropane-tris-(β-(N-aziridinyl) propionate), and pentaerythritol trimethylolpropane-tris-(β-(N-aziridinyl) propionate). Comb copolymers containing (β-aminoester and/ or β-hydroxyamide functionality can be formed by post-polymerization processes.

The styrenic monomers having at least one ortho-, meta-, or para-alkyl group are ethylenically unsaturated monomers containing an aromatic ring that has one or more alkyl substitutions. Suitable alkyl substitutions include linear and branched alkyl groups such as methyl, ethyl, n-propyl, i-propyl, i-butyl, and t-butyl groups. Examples of styrenic monomers having at least one ortho-, meta-, or para-alkyl group are represented by the structure:

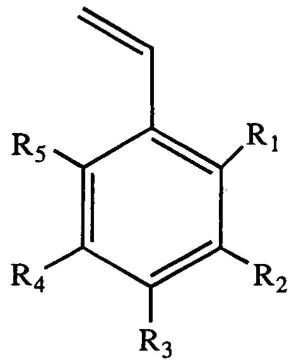

wherein $R_1$, $R_2$, $R_3$, $R_4$, and $R_5$ are H or an alkyl group, with the proviso that at least one of $R_1$, $R_2$, $R_3$, $R_4$, and $R_5$ is an alkyl group. Preferably, the alkyl group is a $C_1$ to $C_4$ alkyl group. Examples of styrenic monomers having at least one ortho-, meta-, or para-alkyl group include ortho-methylstyrene; meta-methylstyrene; para-methylstyrene, also referred to as vinyl toluene; ortho-ethylstyrene; meta-ethylstyrene; para-ethylstyrene; dimethylstyrene such as 2,4-diethylstyrene; 2-methyl,4-ethylstyrene; trimethylstyrene such as 2,4,6-methylstryene; and combinations thereof.

In one embodiment, the comb copolymer contains as polymerized units, from 0.25 to 10 weight %, preferably from 0.5 to 8 weight %, and more preferably, from 1 to 5 weight % of the aldehyde reactive group-containing monomer, based on the weight of the comb copolymer. In this embodiment, preferably the polymer backbone contains polymerized aldehyde reactive group-containing monomer.

In another embodiment, the comb copolymer contains as polymerized units, from 0.5 to 20 weight %, preferably from 1 to 10 weight %, and more preferably from 2 to 6 weight % of the styrenic monomer having at least one ortho-, meta-, or para-alkyl group, based on the weight of the comb copolymer. In this embodiment, preferably the polymer backbone contains polymerized aldehyde reactive group-containing monomer.

In the third aspect of the present invention, the comb copolymer contains as polymerized units, from 0.25 to 20 weight %, preferably from 0.5 to 10 weight %, and more preferably, from 1 to 6 weight % of at least one select graft segment attached to a polymer backbone, based on the weight of the comb copolymer. The comb copolymer contains as polymerized units, from 80 to 99.75 weight %, preferably from 90 to 99.5 weight %, and more preferably, from 94 to 99 weight % of the polymer backbone, based on the weight of the comb copolymer. The polymer backbone of the second aspect of this invention has a glass transition temperature in the range of from -65 °C to 40 °C, preferably in the range of from -45°C to 30 °C, and more preferably, in the range of from -30 °C to 20 °C. The select graft segment contains as polymerized units, from 5 to 100 weight %, preferably from 20 to 100 weight %, and more preferably from 40 to 100 weight % of at least one aldehyde reactive group-containing monomer, based on the weight of the select graft segment. The comb copolymer of this aspect optionally contains from 0 to 24.75 weight %, preferably at least 0 to 24.5 weight %, and more preferably at least 0 to 19 weight % of one or more other graft segments that are not the select graft segment.

Various polymerization processes are suitable for forming the comb copolymer particles, including emulsion polymerization and suspension polymerization. Another suitable polymerization process is solution polymerization followed by emulsification and may involve a solvent removal step. The polymerization processes may be batch, semicontinuous, or continuous processes.

The comb copolymer may be formed by polymerizing macromonomer, at least one first ethylenically unsaturated monomer, and optionally, at least one select monomer. A macromonomer is a polymer or copolymer having at least one terminal ethylenically unsaturated group that is capable of being polymerized in a free radical polymerization process. The macromonomer contains as polymerized units, at least one first monomer and optionally, at least one select monomer. Typically, the macromonomer has a weight average molecular weight in the range of from 400 to 100,000, more preferably in the range of from 1,000 to 50,000, and more preferably in the range of from 2,000 to 35,000. Preferably, the macromonomer is water insoluble. The resulting comb copolymer contains at least one graft segment formed from the polymerized macromonomer; and a polymer backbone formed from polymerized units of the first monomer, the optional at least one select monomer, and the terminal ethylenically unsaturated group of the macromonomer.

In one embodiment, the macromonomer contains as polymerized units less than 10 weight %, preferably less than 5 weight %, more preferably less than 2 weight %, and most preferably less than less than 1 weight % acid containing monomer, based on the total weight of the macromonomer. In a preferred embodiment, the macromonomer does not have polymerized units of the acid containing monomer.

In another embodiment, the comb copolymer is prepared from acid containing macromonomer containing as

polymerized units from 50 to 100 weight % and preferably from 75 to 100 weight % acid containing monomer, based on the total weight of the acid containing macromonomer. Preferred acid containing monomers contained as polymerized units in the acid containing macromonomer include acrylic acid or methacrylic acid.

The macromonomer may contain, as a polymerized unit, a "non-methacrylate monomer". As used herein, a "non-methacrylate monomer" is any first ethylenically unsaturated monomer that is not a methacrylate. For example, butyl acrylate is a first ethylenically unsaturated monomer that is a non-methacrylate monomer. The macromonomer may be free of non-methacrylate monomer, but typically it contains, as polymerized units, at least one non-methacrylate monomer unit, preferably 5 weight % to 50 weight % non-methacrylate monomer, more preferably 10 weight % to 35 weight % non-methacrylate monomer, and most preferably 15 weight % to 25 weight % of non-methacrylate monomer, based on the weight of the macromonomer.

The macromonomer also contains as polymerized units, less than 1 mole %, preferably less than 0.5 mole %, and more preferably less than 0.2 mole % mercapto-olefin compounds, based on the total moles of monomer. Preferably the macromonomer is absent polymerized units of mercapto-olefin compounds. These mercapto-olefin compounds are disclosed in US-A-5,247,000 by Amick. The mercapto-olefin compounds described in Amick have ester functional groups, which are susceptible to hydrolysis.

In one embodiment, the macromonomer is composed of 50 weight % to 95 weight %, more preferably from 65 to 90 weight %, and most preferably from 75 to 85 weight %, based on total weight of macromonomer, of at least one $\alpha$-methyl vinyl monomer, a non $\alpha$-methyl vinyl monomer terminated with an $\alpha$-methyl vinyl monomer, or combinations thereof. The macromonomer may even be formed from 100 weight % $\alpha$-methyl vinyl monomers, non $\alpha$-methyl vinyl monomers terminated with $\alpha$-methyl vinyl monomers, or combinations thereof, based on the total weight of the macromonomer. The phrase "non $\alpha$-methyl vinyl monomer terminated with an $\alpha$-methyl vinyl monomer" means that, when a vinyl monomer bearing no $\alpha$-methyl group is present, as polymerized units, in the macromonomer, the macromonomer must be terminated by a unit derived from an $\alpha$-methyl vinyl monomer. For example, while styrene might be present as polymerized units in a macromonomer chain, that macromonomer chain would be terminated by $\alpha$-methyl styrene, or some other $\alpha$-methyl vinyl monomer. Suitable $\alpha$-methyl vinyl monomers include, for example, methacrylate esters, such as $C_1$ to $C_{18}$ normal or branched alkyl esters of methacrylic acid, including methyl methacrylate, ethyl methacrylate, butyl methacrylate, 2-ethylhexyl methacrylate, isobornyl methacrylate, lauryl methacrylate, or stearyl methacrylate; hydroxyalkyl methacrylates such as hydroxyethyl methacrylate; glycidylmethacrylate; phenyl methacrylate; methacrylamide; methacrylonitrile; or combinations thereof.

The macromonomer useful for preparing the comb copolymer containing in the aqueous polymer composition of this invention may be prepared by various polymerization techniques. One suitable polymerization technique is the high temperature (e.g., at least 150 °C) continuous process such as disclosed in US Patent 5,710,227 or EP-A-1,010,706. In a preferred continuous process, a reaction mixture containing at least one first ethylenically unsaturated monomer and optionally at least one select monomer is passed through a heated zone having a temperature of at least 150 °C, and more preferably a temperature of in the range of from 275 °C to 400 °C. The heated zone may also be maintained at a pressure above 3.5 MPa. Suitable pressures for this process include pressures in the range of from 7 MPa to 35 MPa. The reaction mixture of monomers may also optionally include a solvent such as water, acetone, methanol, isopropanol, propionic acid, acetic acid, dimethylformamide, dimethylsulfoxide, methylethylketone, or combinations thereof.

The macromonomer useful in the preparation of the comb copolymer contained in the composition of the present invention may also be prepared by polymerizing first ethylenically unsaturated monomers and optionally at least one select monomer in the presence of a free radical initiator and a catalytic metal chelate chain transfer agent (e.g., a transition metal chelate). Such a polymerization may be carried out by a solution, bulk, suspension, or emulsion polymerization process. Suitable methods for preparing the macromonomer using a catalytic metal chelate chain transfer agent are disclosed in for example U.S. Patent Nos. 4,526,945, 4,680,354, 4,886,861, 5,028,677, 5,362,826, 5,721,330, and 5,756,605; European publications EP-A-0199,436, and EP-A-0196783; and PCT publications WO 87/03605, WO 96/15158, and WO 97/34934.

Preferably, the macromonomer useful in the present invention is prepared by an aqueous emulsion free radical polymerization process using a transition metal chelate complex. Preferably, the transition metal chelate complex is a cobalt (II) or (III) chelate complex such as, for example, dioxime complexes of cobalt (II), cobalt (II) porphyrin complexes, or cobalt (II) chelates of vicinal iminohydroxyimino compounds, dihydroxyimino compounds, diazadihydroxyiminodialkyldecadienes, or diazadihydroxyiminodialkylundecadienes, or combinations thereof. These complexes may optionally include bridging groups such as $BF_2$, and may also be optionally coordinated with ligands such as water, alcohols, ketones, and nitrogen bases such as pyridine. Additional suitable transition metal complexes are disclosed in for example U.S. Patent Nos. 4,694,054; 5,770,665; 5,962,609; and 5,602,220. A preferred cobalt chelate complex useful in the present invention is Co II (2,3-dioxyiminobutane-$BF_2$)$_2$, the Co III analogue of the aforementioned compound, or combinations thereof. The spatial arrangements of such complexes are disclosed in for example EP-A-199436 and U.S. Patent No. 5,756,605.

In preparing macromonomer by an aqueous emulsion polymerization process using a transition metal chelate chain transfer agent, at least one first ethylenically unsaturated monomer is polymerized in the presence of a free radical initiator and the transition metal chelate according to conventional aqueous emulsion polymerization techniques. Preferably, the first ethylenically unsaturated monomer is an $\alpha$-methyl vinyl monomer as previously described herein. Suitable polymerization temperatures to form the macromonomer using the transition metal chelate include temperatures in the range of from 20 °C to 150 °C, and more preferably from 40 °C to 95 °C. The solids level at the completion of the polymerization is typically from 5 weight % to 70 weight %, and more preferably from 30 weight % to 60 weight %, based on the total weight of the aqueous emulsion.

The concentration of initiator and transition metal chelate chain transfer agent used during the polymerization process is preferably chosen to obtain the desired degree of polymerization of the macromonomer. Preferably, the concentration of initiator is from 0.2 weight % to 3 weight %, and more preferably from 0.5 weight % to 1.5 weight %, based on the total weight of monomer. Preferably, the concentration of transition metal chelate chain transfer agent is from 5 ppm to 200 ppm, and more preferably from 10 ppm to 100 ppm, based on the total monomers used to form the macromonomer.

The first ethylenically unsaturated monomer, the optional select monomer, initiator, and transition metal chelate chain transfer agent may be added in any manner known to those skilled in the art to carry out the polymerization. For example, the monomer, initiator and transition metal chelate may all be present in the aqueous emulsion at the start of the polymerization process (i.e., a batch process). Alternatively, one or more of the components may be gradually fed to an aqueous solution (i.e., a continuous or semi-batch process). For example, it may be desired to gradually feed the entire or a portion of the initiator, one or more monomers, and/or transition metal chelate to a solution containing water and surfactant. In a preferred embodiment, at least a portion of the monomers and transition metal chelate are present at the start of the polymerization, with the remainder of the one or more monomers and transition metal chelate being gradually added during the polymerization. In this embodiment, the monomer may be added as is, or suspended or emulsified in an aqueous solution prior to addition.

Any suitable free radical initiator may be used to prepare the macromonomer. Suitable initiators include for example azo compounds such as 2,2'-azobis (isobutyronitrile), 4,4'-azobis(4-cyanovaleric acid), 2,2'-azobis [2-methyl-N-(1,1-bis(hydroxymethyl)-2-(hydroxyethyl)]-propionamide, and 2,2'-azobis [2-methyl-N-(2-hydroxyethyl)]-propionamide; peroxides such as benzoyl peroxide; t-alkyl organic initiator compounds such as t-alkyl hydroperoxides, t-alkyl peroxides, and t-alkyl peresters; sodium, potassium, or ammonium persulphate; or combinations thereof. Examples of t-alkyl organic initiator compounds include t-alkyl peroxides such as t-amyl peroxide, t-hexyl peroxide, t-heptyl peroxide, and t-octyl peroxide; t-alkyl hydroperoxides such as t-amyl hydroperoxide, t-hexyl hydroperoxide, 2-(4-methyl-cyclohexyl)-prop-2-yl-hydroperoxide, and 2,4,4-trimethylpenyl-2-hydroperoxide; and t-alkyl peresters such as t-amyl peroxypivalate, t-amyl peroxyacetate, t-amyl peroxy-3,5,5-trimethyl hexanoate. Preferred are t-alkyl organic initiator compounds having t-alkyl groups of at least 5 carbon atoms.

Redox initiator systems may also be used, such as for example persulphate or peroxide in combination with a reducing agent such as sodium metabisulphite, sodium bisulfite, sodium formaldehyde sulfoxylate, isoascorbic acid, or combinations thereof. Preferably, the redox initiator system includes one or more of the t-alkyl organic initiator compounds in combination with a suitable reductant such as, for example, sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide, dithionite, formadinesulfinic acid, hydroxymethanesulfonic acid, sodium 2-hydroxy-2-sulfinatoacetic acid, acetone bisulfite, amines such as ethanolamine, acids such as glycolic acid, glyoxylic acid hydrate, lactic acid, glyceric acid, malic acid, tartaric acid, and salts of the preceding acids are used in the polymerization process to prepare the comb copolymer of this invention. The polymerization process optionally includes one or more metal promoters as a component of the redox initiator system. Suitable metal promoters include catalyzing metal salts such as iron, copper, manganese, silver, platinum, vanadium, nickel, chromium, palladium, and cobalt.

The aqueous emulsion polymerization process to prepare the macromonomer optionally employs one or more emulsifiers. Any emulsifier may be used that is effective in emulsifying the monomers such as for example anionic, cationic, or nonionic emulsifiers. In a preferred embodiment, the emulsifier is anionic such as for example sodium, potassium, or ammonium salts of dialkylsulphosuccinates; sodium, potassium, or ammonium salts of sulphated oils; sodium, potassium, or ammonium salts of alkyl sulphonic acids, such as sodium dodecyl benzene sulfonate; sodium, potassium, or ammonium salts of alkyl sulphates, such as sodium lauryl sulfate; ethoxylated alkyl ether sulfates; alkali metal salts of sulphonic acids; $C_{12}$ to $C_{24}$ fatty alcohols, ethoxylated fatty acids or fatty amides; sodium, potassium, or ammonium salts of fatty acids, such as sodium stearate and sodium oleate; or combinations thereof. The amount of emulsifier in the aqueous emulsion is preferably from 0.05 weight % to 10 weight %, and more preferably from 0.3 weight % to 3 weight %, based on the total weight of the monomers.

The macromonomer may be provided as an aqueous macromonomer emulsion containing the macromonomer as water insoluble particles dispersed in an aqueous medium. The aqueous macromonomer emulsion may contain a mixture of two or more different macromonomers. The mixture may contain particles including two or more different

macromonomers; or a blend of two or more different types of macromonomer particles, such as a blend containing first macromonomer particles and second macromonomer particles. The average particle diameter of the macromonomer particles useful for preparing the comb copolymer particles is typically in the range of from 50 nm to 500 nm and more preferably from 80 nm to 200 nm. Capillary Hydrodynamic Fractionation technique using a Matec CHDF 2000 particle size analyzer equipped with a HPLC type Ultra-violet detector is a suitable technique to measure the average particle diameter of the macromonomer particles contained in the aqueous macromonomer emulsion. Aqueous macromonomer emulsions useful for preparing the comb copolymer particles typically contain from 20 weight % to 60 weight %, and more preferably from 30 weight % to 50 weight % of at least one water insoluble macromonomer as particles, based on the total weight of aqueous macromonomer emulsion.

The aqueous macromonomer emulsion useful in preparing the comb copolymer particles contained in the present invention may be formed in any manner known to those skilled in the art. For example, the macromonomer, produced by any known method, may be isolated as a solid (e.g., spray dried) and emulsified in water. Also, for example, the macromonomer, if prepared by an emulsion or aqueous based polymerization process, may be used as is, diluted with water, or concentrated to a desired solids level. In one embodiment, the macromonomer is formed from the emulsion polymerization of at least one first monomer in the presence of a transition metal chelate chain transfer agent to provide an aqueous macromonomer emulsion.

In one process to prepare the comb copolymer, the aqueous macromonomer emulsion is provided containing a plurality of water-insoluble particles of the macromonomer; a monomer composition containing first monomer, the optional select monomer, or a mixture thereof is combined with the aqueous macromonomer emulsion to form the reaction mixture; and the reaction mixture is polymerized to provide the comb copolymer particles. In this emulsion polymerization process, the water insoluble macromonomer particles are typically chosen to have an average particle diameter such that, upon addition of first monomers and the optional select monomers, particles of the resulting graft copolymer having a desired average particle diameter will be formed. Generally, the average diameter of the graft copolymer particle is directly proportional to the initial particle size of the macromonomer and the concentration of unreacted first monomer in the polymerization reaction mixture, assuming all the particles participate equally in the polymerization. In one embodiment of this process, the macromonomer contains as polymerized units less than 10 weight %, preferably less than 5 weight %, more preferably less than 2 weight % and most preferably less than less than 1 weight % acid containing monomer, based on the total weight of the macromonomer. In a different embodiment of this process, the macromonomer does not include acid containing monomer as polymerized units.

In the emulsion polymerization process to prepare the comb copolymer particles, the monomer composition, which is added to the aqueous macromonomer emulsion, may contain all (i.e., 100%) monomer, or contain monomer dissolved or dispersed in an organic solvent and/or water. Preferably, the level of monomer in the monomer composition is from 50 weight % to 100 weight %, more preferably from 60 to 90 weight %, and most preferably from 70 to 80 weight %, based on the total weight of the monomer composition. Examples of organic solvents that may be present in the monomer composition include $C_6$ to $C_{14}$ alkanes. The organic solvent in the monomer composition will be no more than 30 weight %, and more preferably no more than 5 weight %, based on the total weight of the monomer composition. Optionally, the monomer composition contains other synthesis adjuvants such as buffers or emulsifying agents

In a preferred embodiment, the monomers in the monomer composition are pre-emulsified in water to form an "aqueous monomer emulsion". Preferably, the aqueous monomer emulsion contains monomer droplets having an average droplet diameter in the range of from 1 micron to 100 microns, and more preferably from 5 micron to 50 microns. Any suitable emulsifying agent may be used, for example those previously described, to emulsify the monomer to the desired monomer droplet size. Preferably, the level of emulsifying agent, if present, will be from 0.2 weight % to 2 weight % based on the total weight of monomer in the monomer composition.

In a preferred embodiment, the monomer composition includes one or more first monomers selected from $C_1$ to $C_{18}$ normal or branched alkyl esters of acrylic acid, including methyl acrylate, ethyl acrylate, n-butyl acrylate and 2-ethylhexyl acrylate; styrene; substituted styrenes, such as methyl styrene, $\alpha$-methyl styrene or t-butyl styrene; butadiene; or combinations thereof.

In the emulsion polymerization process to prepare the comb copolymer particles, the aqueous macromonomer emulsion and monomer composition are combined to form an aqueous reaction mixture, and polymerized in the presence of a free radical initiator to form the comb copolymer particles. The aqueous macromonomer emulsion and monomer composition may be combined in various ways to carry out the polymerization. For example, the aqueous macromonomer emulsion and the monomer composition may be combined prior to the start of the polymerization reaction to form the aqueous polymerization mixture. Alternatively, the monomer composition may be gradually fed into the aqueous macromonomer emulsion, or the aqueous macromonomer emulsion may be gradually fed into the monomer composition.

The initiator may be added to the aqueous reaction mixture in various ways. For example, the initiator may be added in "one shot" to the aqueous macromonomer emulsion prior to the addition of the monomer composition, to the monomer composition, or a mixture of the aqueous reaction mixture containing the aqueous macromonomer emulsion and the monomer composition at the start of the polymerization. Alternatively, all or a portion of the initiator can be co-added as a separate addition stream, as part of the aqueous macromonomer emulsion, as part of the monomer composition, or any combination of these methods.

Initiators useful in polymerizing the macromonomer, first monomer, and optionally the at least one select monomer include any suitable initiator for emulsion polymerizations known to those skilled in the art. The selection of the initiator will depend on such factors as the initiator's solubility in one or more of the reaction components (e.g. monomer, macromonomer, water); and half life at the desired polymerization temperature (preferably a half life within the range of from about 30 minutes to about 10 hours). Suitable initiators include those previously described herein in connection with forming the macromonomer, such as azo compounds such as 4,4'-azobis(4-cyanovaleric acid), peroxides such as hydrogen peroxide, sodium peroxide, potassium peroxide, t-butyl hydroperoxide, t-amyl peroxide, and cumene hydroperoxide; ammonium and/or alkali metal persulfates such as sodium, potassium, and ammonium persulfate; redox initiator systems such as, for example, persulphate or peroxide in combination with a reducing agent such as sodium metabisulfite, sodium bisulfite, sodium formaldehyde sulfoxylate, isoascorbic acid; or combinations thereof. Metal promoters, such as iron; and buffers, such as sodium bicarbonate, may also be used in combination with the initiator. Additionally, Controlled Free Radical Polymerization (CFRP) methods such as Atom Transfer Radical Polymerization; or Nitroxide Mediated Radical Polymerization may be used. Preferred initiators include azo compounds such as 4,4'-azobis(4-cyanovaleric acid). Suitable levels of initiator employed in the polymerization of the comb copolymer are in the range of from 0.1 weight % to 1 weight % initiator is used, based on the total weight of the monomer and the macromonomer.

The polymerization temperatures to prepare the comb copolymer are typically in the range of from 0 °C to 150 °C, and more preferably from 20 °C to 95 °C.

One skilled in the art will recognize that other components used in conventional emulsion polymerizations may optionally be used in the method of the present invention. For example, to reduce the molecular weight of the resulting graft copolymer, the polymerization may optionally be conducted in the presence of one or more chain transfer agents, such as n-dodecyl mercaptan, thiophenol; halogen compounds such as bromotrichloromethane; or combinations thereof. Also, additional initiator and/or catalyst may be added to the polymerization reaction mixture at the completion of the polymerization reaction to reduce the level of any residual monomer, (e.g., chasing agents). Examples of suitable initiators to reduce the residual monomer level are disclosed hereinabove.

The aqueous polymer composition containing the plurality of comb copolymer particles preferably has a solids level in the range of from 30 weight % to 70 weight %, and more preferably from 40 weight % to 60 weight %. The aqueous polymer composition preferably contains comb copolymer particles that are water insoluble and have an average particle diameter in the range of from 60 nm to 500 nm, and more preferably from 80 nm to 200 nm.

The comb copolymer particles of the aqueous polymer composition can be isolated, for example, by spray drying or coagulation, followed, for example, by forming a coating by powder coating methods, or by redispersing in an aqueous medium.

In one process to form the comb copolymer particles, the polymerization is conducted in two stages. In the first stage, the macromonomer particles are formed in a first aqueous emulsion polymerization process, and in the second stage, the macromonomer particles are polymerized in the presence of the first monomer and the optional select monomer. This two stage process may be conducted in a single vessel or alternatively, each stage may be conducted in separate vessels.

In a different embodiment, the comb copolymer particles are prepared by polymerization of the macromonomer, the first monomer, the optional select monomer in the presence of an acid containing monomer, acid containing macromonomer, or combinations thereof. The acid containing monomer or acid containing macromonomer may be added in any manner to the reaction mixture. Preferably, the acid containing monomer or acid containing macromonomer is present in the monomer composition. The acid containing monomer or acid containing macromonomer may also be added as a separate stream to the reaction mixture. The amount of acid containing monomer or acid containing macromonomer added to the reaction mixture is preferably from in the range of from 0.2 weight % to 10 weight %, more preferably in the range of from 0.5 weight % to 5 weight %, and most preferably in the range of from 1 weight % to 2 weight %, based on the total weight of monomer and macromonomer added to the reaction mixture.

In another embodiment, the comb copolymer is prepared in the presence of a macromolecular organic compound having a hydrophobic cavity. The macromolecular organic compound having a hydrophobic cavity may, for example, be added to the monomer composition, the aqueous macromonomer emulsion, or the reaction mixture used to form the comb copolymer particles. Also, for example, the macromolecular organic compound may be added to an aqueous emulsion of first monomer and optional select monomer used to form the macromonomer. Suitable techniques for using a macromolecular organic compound having a hydrophobic cavity are disclosed in, for example, US-A-5,521,266. Macromolecular organic compounds having a hydrophobic cavity useful in preparing the comb copolymer particles of the present invention include for example, cyclodextrin or cyclodextrin derivatives such as hydroxypropyl β-cyclodextrin and methyl β-cyclodextrin; cyclic oligosaccharides having a hydrophobic cavity such as cycloinulohexose, cycloinuloheptose, or cycloinuloctose; calyxarenes; cavitands; or combinations thereof. Preferably, the macromolecular organic compound is ß-cyclodextrin, more preferably methyl-ß-cyclodextrin or hydroxypropyl ß-cyclodextrin.

A volatile organic compound ("VOC") is defined herein as a carbon containing compound that has a boiling point below 280 °C at atmospheric pressure. Compounds such as water and ammonia are excluded from VOCs.

In one embodiment, aqueous polymer composition of this invention contains less than 5% VOC by weight based on the total weight of the aqueous polymer composition; preferably the aqueous polymer composition contains less than 3% VOC by weight based on the total weight of the aqueous polymer composition; more preferably the aqueous polymer composition contains less than 1.7% VOC by weight based on the total weight of the aqueous polymer composition. A flow VOC" aqueous polymer composition herein is an aqueous polymer composition that contains less than 5% VOC by weight based on the total weight of the aqueous polymer composition; preferably it contains between 0.01% and 1.7% by weight based on the total weight of the aqueous polymer composition.

Typical methods of paint or coating preparation introduce adventitious VOCs from the aqueous dispersion containing the polymer particles having pendant crosslinking groups, biocides, defoamers, soaps, dispersants, and thickeners. These typically account for 0.1% VOC by weight based on the total weight of the aqueous composition. Additional methods such as steam stripping and choice of low VOC containing additives like biocides, defoamers, soaps, dispersants, and thickeners are suitable for further reducing the aqueous composition to less than 0.01% VOC by weight based on the total weight of the aqueous composition.

In addition, the aqueous polymer composition optionally includes other components, including other polymers, surfactants, pigments such as titanium dioxide, extenders, dyes, pearlescents, adhesion promoters, crosslinkers, dispersants, defoamers, leveling agents, optical brighteners, ultraviolet stabilizers, absorbing pigments, coalescents, rheology modifiers, preservatives, biocides, polymer particles having internal voids, and antioxidants. The aqueous polymer composition may contain coalescent in the amount of from 0 weight % to 40 weight %, more preferably 0 weight % to 20 weight %, and most preferably 0 weight % to 5 weight %, based on the weight of the comb copolymer. Preferably, the aqueous polymer composition is absent coalescent.

In one embodiment, the aqueous polymer composition further contains macromonomer that has a similar composition and glass transition temperature to the at least one graft segment contained in the comb copolymer. The addition of macromonomer is useful for modifying the properties of coatings prepared from the comb copolymer particles. The aqueous polymer composition of this embodiment may contain from 1 to 30 weight % macromonomer based on the weight of the comb copolymer particles.

The amount of pigment and extender in the aqueous polymer composition may vary from a pigment volume concentration (PVC) of 0 to 90 and thereby encompass coatings otherwise described in the art, for example, as clear coatings, flat coatings, satin coatings, semi-gloss coatings, gloss coatings, primers, flexible coatings, elastomeric coatings, textured coatings, and automotive coatings. The pigment volume concentration is calculated by the following formula:

$$\text{PVC (\%)} = \frac{\text{volume of pigment(s) + volume extender(s)}}{\text{total dry volume of paint}} \times 100.$$

Suitable pigment levels in the aqueous polymer composition of this invention are in the range of from zero to 70 volume %, preferably from zero to 40 volume %, and more preferably, from 2 to 25 volume %, based on the total volume of pigment and total volume of polymer including the comb copolymer polymer, contained in the aqueous polymer composition.

Conventional coatings application methods such as, for example, brushing, rolling, and spraying methods such as, for example, air-atomized spray, air-assisted spray, airless spray, high volume low pressure spray, and air-assisted airless spray may be used in the method of this invention. Additionally, for some systems other application techniques apply such as, caulk gun, roll coaters, and curtain coaters. The aqueous system may be advantageously applied to substrates such as, for example, plastic, wood, metal, primed surfaces, previously painted surfaces, weathered painted surfaces, glass, composites, and cementitious substrates. Drying is typically allowed to proceed under ambient conditions such as, for example, at 0 °C to 35 °C but may be accelerated with heat or low humidity.

A method of forming a coated substrate from the aqueous polymer composition of this invention includes: providing the aqueous polymer composition; applying the aqueous polymer composition onto a substrate; drying or allowing to dry the aqueous polymer composition that was applied onto the substrate to prepare a dry coating to provide the coated substrate.

The aqueous polymer composition may be applied on a substrate using various techniques including, for example, brushing, rolling, drawdown, dipping, with a knife or trowel, curtain coating, and spraying methods such as, for example, air-atomized spray, air-assisted spray, airless spray, high volume low pressure spray, and air-assisted airless spray. The wet coating thickness of the applied aqueous polymer composition may be in the range of 1 micron to 250 microns. The aqueous polymer composition is applied onto a substrate as a single coat or multiple coats. After

application, the applied aqueous polymer composition is typically allowed to dry at ambient conditions or alternatively dried by the application of heat to provide a dry coating. Drying is typically allowed to proceed under ambient conditions such as, for example, at 0 °C to 35 °C.

The aqueous polymer composition is suitable for application onto various substrates including processed timber such as medium density fiber board, chip board, laminates; mineral substrates such as masonry, cement, fiber cement, cement asbestos, plaster, plasterboard, glazed and unglazed ceramic; metal substrates such as galvanized iron, galvanized steel, cold rolled steel, Zincalum metal, Zincalum II metal, aluminum, wrought iron, drop forged steel, stainless steel; previously painted or primed surfaces (fresh, aged or weathered) including but not limited to acrylic coatings, vinyl acrylic coatings, styrene acrylic coatings, powder coated surfaces, solvent acrylic coatings, alkyd resin coatings, solvent urethane coatings, epoxy coatings; cellulosic substrates such as paper and paperboard; glass; asphalt; leather; wallboard; nonwoven materials; and synthetic substrates such as polyvinyl chloride, polyvinylidene chloride, polyethylene, and polypropylene.

The dry coating prepared from the aqueous polymer composition is suitable as a protective coating or an aesthetic coating. Examples of suitable coatings include architectural coatings such as interior and exterior paint coatings, including masonry coatings, wood coating and treatments; floor polishes; maintenance coatings such as metal coatings; paper coatings; and traffic coatings such as those coatings used to provide markings on roads, pavements, and runways.

Gel Permeation Chromatography, otherwise known as size exclusion chromatography, actually separates the members of a distribution of polymer chains according to their hydrodynamic size in solution rather than their molar mass. The system is then calibrated with standards of known molecular weight and composition to correlate elution time with molecular weight. The techniques of GPC are discussed in detail in *Modern Size Exclusion Chromatography,* W. W. Yau, J. J Kirkland, D. D. Bly; Wiley-Interscience, 1979, and in *A Guide to Materials Characterization and Chemical Analysis,* J. P. Sibilia; VCH, 1988, p.81-84.

For example, the molecular weight information for a low molecular weight sample (e.g., 10,000) may be determined as follows: The sample (an aqueous emulsion containing low molecular weight particles) is dissolved in THF at a concentration of approximately 0.1% weight sample per volume THF, and shaken for 6 hours, followed by filtration through a 0.45 μm PTFE (polytetrafluoroethylene) membrane filter. The analysis is performed by injecting 100 μl of the above solution onto 3 columns, connected in sequence and held at 40°C. The three columns are: one each of PL Gel 5 100, PL Gel 5 1,000, and PL Gel 5 10,000, all available from Polymer Labs, Amherst, Massachusetts. The mobile phase used is THF flowing at 1 ml/min. Detection is via differential refractive index. The system was calibrated with narrow polystyrene standards. PMMA-equivalent molecular weights for the sample are calculated via Mark-Houwink correction using $K=14.1\times10^{-3}$ml/g and a=0.70 for the polystyrene standards and $K=10.4\times10^{-3}$ml/g and a=0.697 for the sample.

The following examples are presented to illustrate the composition and the process of the invention. These examples are intended to aid those skilled in the art in understanding the present invention. The present invention is, however, in no way limited thereby.

### Alkyd Adhesion Test Method

White pine boards are painted with a commercial alkyd paints and allowed to dry for 6 to 8 weeks. The painted white pine board are cut into 5 cm wide strips. Two coats of the aqueous polymer composition is applied to the painted strips in a room having a temperature of 25 °C and a relative humidity of 50%. A dry of 4 to 5 hours is allowed between the two coats. The coated samples are allowed to dry for at least 12 hours prior to testing.

The dried coated samples are scored with a Gardner Adhesion Knife that produces a 100 square grid in two passes. Next, a 2.54 wide piece of Permacel tape is applied over the square grid without trapping air beneath the applied tape. The applied tape is pulled off the dried coated sample at an 90° angle from the dried coated substrate. The number of squares of coating remaining on the dried coated substrate is a measure of the adhesion of the dried coating to the alkyd coated substrate. The alkyd adhesion is reported as the percent of dried coating squares remaining. An alkyd adhesion value of 80% and greater indicates an acceptable level of alkyd adhesion.

### Scrub Resistance Test Procedure

The aqueous polymer compositions are applied by drawdowns onto black vinyl panels, (Type P-121-10N; The Leneta Company). The applied wet film thickness is 178 micron (7 mil). The wet films are allowed to dry in a horizontal position for 7 days at a temperature of 25 °C and 50% relative humidity for 1 week prior to testing. Four drawdowns are made of each sample.

The coated vinyl panel is secured to the abrasion tester using a gasketed from and weights or clamps. The abrasion tester contains a shim over which a brush scrubs the coated vinyl panel. The brush is soaked in water for

about 12 hours. Prior to testing, the brush is shaken to remove excess water and then mounted on the holder of the abrasion tester. The scrub medium is stirred and then 10 grams of the scrub medium is evenly applied on the brush bristles. The brush is placed in the center of the coated vinyl panel. The abrasion tester is started and the number of scrub cycles is recorded. After each 400 scrub cycles, 20 g of the stirred scrub medium and 5 g water are added onto the brush. The scrub resistance is the number of cycles needed to remove the dried coating in one continuous line across a 12 mm width of the coated vinyl panel. The reported scrub resistance is the average of four separate measurements. A scrub resistance of 800 and greater is considered acceptable.

Gloss Determination Test Procedure

A test paint is thoroughly stirred and drawn down on a Leneta 5C chart (Leneta Co.) with a 77 micron (3 mil) Bird film applicator and allowed to dry for 7 days at 25 °C and 50% relative humidity. After 7 days, the 20° gloss (20° from perpendicular) of the dried films are measure using a calibrated Gardner gloss meter (Paul Gardner Co.; Columbia, Maryland). Five measurements are taken for each sample, and the average is reported.

Table A -

| Abbreviations | |
|---|---|
| Abbreviation | |
| BA | Butyl acrylate |
| MMA | Methyl methacrylate |
| MAA | Methacrylic acid |
| CoBF | Co(II)-(2,3-dioxyiminobutane-$BF_2)_2$ |
| Co4-MePhBF | Co(II)-(4,4'-dimethylbenzildioxime-$BF_2)_2$ |
| CVA | 4,4-azobis(4-cyanovaleric acid) |
| DBS | Dodecyl benzene sulfonate |
| GC | Gas chromatograph |
| SEC | Size exclusion chromatography |
| HPLC | High performance liquid chromatography |
| Init. | Initiator |
| NaPS | Sodium persulfate |
| Mw | Weight average molecular weight |
| Mn | Number average molecular weight |
| MM | Macromonomer |
| PMAA-MM | Poly-methacrylic acid macromonomer |
| Ex. | Example |
| Comp. | Comparative |
| Wako™ VA-044 initiator | 2,2'-azobis[2-(2-imidazolin2-2yl)propane] dihydrochloride |

In the Examples, monomer conversion was determined by GC analysis of unreacted monomer using standard methods. Weight % solids for the macromonomer and copolymer compositions were determined by gravimetric analysis. Particle size of the macromonomer and copolymer compositions were obtained using a Matec CHDF 2000 particle size analyzer equipped with a HPLC type Ultra-violet detector.

Macromonomer was measured for number average molecular weight by SEC using a polystyrene standard from Polymer Laboratories (PS-1) having a peak average molecular weight ranging from 580 to 7,500,000 with narrow molecular weight distribution. Conversions from polystyrene to PMMA were made using Mark-Houwink constants. Copolymer compositions were evaluated for number average molecular weight and weight average molecular weight using SEC as described above.

The average particle diameter, also referred to as "average particle size" is measured by Capillary Hydrodynamic Fractionation technique using a Matec CHDF 2000 particle size analyzer equipped with a HPLC type Ultra-violet detector.

Example 1 - Preparation of Macromonomers by Emulsion Polymerization

Macromonomer (MM) was prepared by emulsion polymerization in a 5-liter, four neck round bottom reaction flask equipped with a mechanical stirrer, temperature control device, condenser, monomer feed line, and a nitrogen gas inlet. The specific amounts of water, surfactant, monomers, chain transfer agent (CTA), and initiator used in Examples 1.1 to 1.5 are shown in Table 1.1. These ingredients were added according to the following procedure. In a different flask from the reaction flask, a monomer solution was prepared by dissolving the chain transfer agent in the monomer mixture under a nitrogen purge. The monomer mixture included all the monomers listed in Table 1.1. Deionized water and surfactant were introduced into the reaction flask at room temperature to form an aqueous surfactant solution. The aqueous surfactant solution was mixed and heated to 82.5 °C with stirring under a nitrogen purge. Next, an initiator solution containing the initiator listed in Table 1.1 in 30 g water was added to the aqueous surfactant solution with stirring. A seed monomer mix (Table 1.1) was added to the reaction flask and allowed to react for 12 minutes. At the end of 12 minutes, 20 weight % of the monomer solution (monomer emulsion for Example 1.4) was added. The remaining monomer solution (monomer emulsion for Example 1.4) was added over a period of 80-120 minutes. For Examples 1.1 and 1.5, an initiator solution (4.5 g NaPS in 30 g of water) was coadded with the monomer solution. At the end of the addition period, the reaction mixture was maintained at 82.5°C for an additional 2 hours. The reaction mixture was then cooled to room temperature and passed through a filter cloth to remove any coagulum.

Generally, the resulting macromonomer emulsion contained less than 5 weight % coagulum based on the total weight of macromonomer, and the conversion of monomer was greater than 99 weight %, based on the total weight of monomer added. The Mn, weight % solids and particle size for each macromonomer are reported in Table 1.2.

Table 1.1 -

| Preparation of Macromonomers (MM) | | | | | | | | |
|---|---|---|---|---|---|---|---|---|
| Ex. | $H_2O$ (g) | Surf[5] (g) | Seed Monomer Mix | MMA (g) | MAA (g) | EA (g) | CTA[1](g) | Init. [3] (g) |
| 1.1 | 2565 | 75.5 | 10.8 BA/ 10.8 MMA | 844.9 | 47.6 | 297.5 | 0.84 | 4.5 |
| 1.2 | 2748 | 80.9 | 11.3 BA/ 11.3 MMA | 772.1 | 43.5 | 271.9 | 0.90 | 11.75 |
| 1.3 | 2693 | 79.3 | 11.3 BA/ 11.3 MMA | 887 | 59.8 | 312.5 | 0.88 | 6.5 |
| 1.4 | 1832 | 53.9 | 5 BA/5 MMA | 228 | 12.8 | 80.3 | 0.80 | 7.7 |
| 1.5 | 2380 | 54.8 | 63 MMA | 838 | 59.8 | 299.4 | 0.16 | 12.6[4] |

(1) Chain transfer agent (Co4-MePhBF);
(2) CoBF;
(3) NAPS except for Ex. 1.5;
(4) CVA; and
(5) DBS

Table 1.2 -

| Properties of Macromonomers (MM) | | | |
|---|---|---|---|
| Ex. | Particle Size (nm) | Mn | Wt. % Solids |
| 1.1 | 75 | 12921 | 29.6 |
| 1.2 | 74 | 7138 | 26.5 |
| 1.3 | 62 | 16730 | 30.9 |

Table 1.2 - (continued)

| Properties of Macromonomers (MM) | | | |
|---|---|---|---|
| Ex. | Particle Size (nm) | Mn | Wt. % Solids |
| 1.4 | 49 | 8829 | 25.4 |
| 1.5 | 104 | 12643 | 33.3 |

Example 2 - Preparation of PMAA-MM By Solution Polymerization

MAA macromonomer (PMAA-MM) was prepared by aqueous solution polymerization in a 2-liter baffled flange flask equipped with a mechanical stirrer, condenser, temperature control device, initiator feed lines and a nitrogen inlet. The apparatus was purged with nitrogen for 30 minutes following the addition of 0.018 g of CoBF. Deionized water (1080 g) was charged to the flask and heated to 55 °C under a nitrogen purge. A monomer mixture containing 510 ml of MAA and 0.01 g of CoBF was prepared separately under nitrogen. When the deionized water reached a temperature of 55 °C, 1.94 g of initiator (Wako VA-044 initiator) was added to the reaction flask. Following the addition of the initiator, the monomer mixture was added over a period of 60 minutes to the reaction flask with stirring. The temperature was then held at 55 °C for 2 hours following completion of the monomer mixture feed. After cooling the reaction flask to room temperature, the MAA-MM (Example 2.1) was isolated as dried polymer by rotary evaporation. The number average molecular weight (Mn) of the MAA-MM was determined to be 4030 by proton nuclear magnetic resonance, based on the integration of the vinyl end group with respect to the methyl and methylene groups of the polymer chain.

Example 3 - Preparation of Aqueous polymer compositions Containing Comb Copolymers Particles by Semi-continuous Process

Aqueous polymer compositions containing comb copolymer particles were prepared by a semi-continuous emulsion polymerization process in a 5-liter round bottom flask with four neck equipped with a mechanical stirrer, temperature control device, initiator feed lines and a nitrogen inlet. The specific amounts of macromonomer (MM, as emulsion), water, surfactant, monomers, acid containing monomers, and initiator are shown in Table 3.1. These ingredients were added according to the following procedure. A monomer emulsion of deionized water ($H_2O$ #2 in Table 3.1), surfactant#1, MM from the example indicated in Table 3.1, and 20% of the monomer emulsion were added into the reaction flask at room temperature to form a reaction mixture. An aqueous solution of potassium hydroxide (22.5 wt. %) was added to the reaction mixture to adjust the pH to 7.5. The reaction mixture was heated to a temperature of 82.5 °C while stirring under a nitrogen purge. Upon reaching the temperature of 82.5 °C, an initiator solution (1.67 g of NaPS in 50 g of water) was introduced into the reaction flask. The remaining monomer emulsion was added over a period of 60 minutes while the temperature was maintained at 82.5 °C. The conversion of BA, determined by standard GC methods, was greater than 99 weight % based on the total weight of BA charged.

A comparative aqueous polymer composition that did not contain as a polymerized unit a select monomer, Comparative A, was prepared by the general process for employed to prepare Examples 1.1 to 1.13.

Table 3.1 -

| Preparation of Aqueous polymer compositions Containing Comb Copolymer Particles by Semi-Continuous Process | | | | | | | | | | | | |
|---|---|---|---|---|---|---|---|---|---|---|---|---|
| Example | MM[1] | | $H_2O$ #1 (g) | $H_2O$ #2 (g) | Surf[2]#1 (g) | Surf[2] #2 (g) | BA (g) | Other[3] (g) | Sty (g) | UM[6] (g) | Acid[7] (g) | Init.[8] (g) |
| | Ex | Amt. (g) | | | | | | | | | | |
| 3.1 | 1.1 | 604.5 | 925 | 310 | 6 | 13 | 1156 | 0 | 410.1 | 34.8 | 26.5 | 1.67 |
| 3.2 | 1.1 | 906.4 | 700 | 310 | 6 | 13 | 971.4 | 0 | 506.6 | 32.6 | 26.5 | 1.67 |
| 3.3 | 1.2 | 604.5 | 700 | 350 | 6 | 13 | 902.7 | 0 | 663.5 | 34.8 | 26.5 | 1.67 |
| 3.4 | 1.1 | 1209 | 400 | 350 | 6 | 13 | 1025 | 0 | 361 | 36.5 | 26.8 | 1.67 |
| 3.5 | 1.1 | 1209 | 400 | 350 | 6 | 13 | 800.7 | 0 | 585.7 | 32 | 26.8 | 1.67 |
| 3.6 | 1.1 | 556.1 | 782 | 322 | 6 | 12 | 1064 | 346.7[3] | 30.8[5] | 17.4 | 24.7 | 1.53 |
| 3.7 | 1.3 | 289.3 | 442 | 175 | 3 | 6.5 | 577.8 | 0 | 205 | 17.4 | 13.4 | 0.83 |
| 3.8 | 1.4 | 451.7 | 350 | 175 | 3 | 6.5 | 512.6 | 0 | 181.2 | 17.4 | 13.4 | 0.83 |
| 3.9 | 1.3 | 289.3 | 442 | 175 | 3 | 6.5 | 704.4 | 0 | 78.3 | 17.4 | 13.2 | 0.83 |
| 3.10 | 1.4 | 451.7 | 350 | 175 | 3 | 6.5 | 625 | 0 | 68.8 | 17.4 | 13.4 | 0.83 |
| 3.11 | 1.3 | 434.1 | 350 | 175 | 3 | 6.5 | 552.6 | 188.9[4] | 0 | 17.4 | 13.4 | 0.83 |
| 3.12 | 1.3 | 289.3 | 442 | 175 | 3 | 6.5 | 514.5 | 0 | 268.3 | 17.4 | 13.4 | 0.83 |
| Comp. A | 1.5 | 483.5 | 375 | 75 | 0 | 16 | 410.8 | 0 | 221.2 | 0 | 12.0 | 0.61 |

(1) Macromonomer emulsion prepared by method of Example 1.
(2) Ethoxylated $C_6$ to $C_{18}$ alkyl ether sulfate having from 1 to 40 ethylene oxide groups per molecule (30% active in water).
(3) Methyl Methacrylate
(4) Isobutyl Methacrylate.
(5) Vinyl Toluene
(6) Ureido Methacrylate (50% in water)
(7) PMAA-MM (prepared by method of Example 2.1)
(8) NaPS

The aqueous polymer compositions of Examples 3.1 to 3.12 and Comparative A were analyzed by various analytical techniques to determine weight % solids, particle size, weight average molecular weight, number average molecular weight, and percent incorporation of macromonomer.

Determination of the amount of unreacted macromonomer was carried out by HPLC analysis using the following procedure. The aqueous polymer compositions were dissolved in THF and analyzed by gradient elution on an LC-18 column supplied by Supelco, located in Bellefonte, PA such that a well-isolated peak was observed for the unreacted macromonomer. Quantification was carried out by calibrating the detector response using known standards of the same macromonomer employed in the synthesis. The results of the characterization are reported in Table 3.2 below.

Table 3.2 -

| Characterization Of Aqueous polymer compositions of Examples 3.1 to 3.13 | | | | | | | |
|---|---|---|---|---|---|---|---|
| Example | % Solids | Particle Size (nm) | Backbone $T_g$ (°C) | Macromonomer Level (%) | Mw (x $10^{-3}$) | Mn (x $10^{-3}$) | PMMA-MM Incorp.[(1)] (wt%) |
| 3.1 | 43.4 | 130 | -26 | 10 | 427 | 270 | (2) |

(1) Based on the total weight of macromonomer added to reaction vessel.
(2) Not measured

Table 3.2 - (continued)

| Characterization Of Aqueous polymer compositions of Examples 3.1 to 3.13 | | | | | | | |
|---|---|---|---|---|---|---|---|
| Example | % Solids | Particle Size (nm) | Backbone $T_g$ (°C) | Macromonomer Level (%) | Mw (x $10^{-3}$) | Mn (x $10^{-3}$) | PMMA-MM Incorp.(1) (wt%) |
| 3.2 | 44.4 | 131 | -16 | 15 | 614 | 302 | (2) |
| 3.3 | 44.6 | 140 | -6 | 10 | 527 | 286 | 94 |
| 3.4 | 42.8 | 130 | -26 | 20 | 436 | 199 | (2) |
| 3.5 | 42.7 | 127 | -6 | 20 | 224 | 147 | (2) |
| 3.6 | 44.1 | 124 | -26 | 10 | 280 | 195 | (2) |
| 3.7 | 44.0 | 112 | -26 | 10 | 555 | 310 | (2) |
| 3.8 | 44.9 | 147 | -26 | 20 | 201 | 32 | (2) |
| 3.9 | 43.0 | 113 | -43 | 10 | 492 | 289 | (2) |
| 3.10 | 45.0 | 129 | -43 | 20 | 556 | 231 | (2) |
| 3.11 | 44.5 | 118 | -37 | 15 | 417 | 215 | (2) |
| 3.12 | 43.8 | 118 | -16 | 10 | 323 | 62 | (2) |
| Comp. A | 44.4 | 140 | -16 | 20 | 593 | 175 | (2) |

(1) Based on the total weight of macromonomer added to reaction vessel.
(2) Not measured

Example 4 - Preparation of Dried Pigmented Coatings From the Aqueous polymer compositions

Aqueous polymer compositions, which contain titanium dioxide pigment, are prepared using the formulation in Table 4.1.

Table 4.1 -

| Preparation of Aqueous Pigmented Coating Composition of Example 4.1 | |
|---|---|
| Material | Example 4.1 Weight (g) |
| *Combine the following materials in a Cowles mixer* | |
| propylene glycol | 62.50 |
| Tamol™ 731 dispersant (25%) | 14.21 |
| Foamaster™ 111 defoamer | 1.04 |
| Kathon™ LX biocide (1.4%) | 1.88 |
| Ti-Pure™ R-706 titanium dioxide | 208.37 |
| water #1 | 12.48 |
| *Add the following materials with low shear mixing* | |
| Example 3.1 | 583.8 |
| Texanol™ coalescent | 24.35 |
| Triton™ CF-10 surfactant | 1.22 |
| ammonia (28 %) | 3.6 |
| Acrysol™ RM-2020 NPR thickener | 25.0 |
| Acrysol™ RM-8W thickener | 2.0 |
| water #2 | 86.7 |

Table 4.1 - (continued)

| Preparation of Aqueous Pigmented Coating Composition of Example 4.1 | |
|---|---|
| Material | Example 4.1 Weight (g) |
| *Add the following materials with low shear mixing* | |
| Total | 1026.2 |

Aqueous pigmented coating compositions, Examples 4.2 to 4.5, and comparative aqueous pigment coating composition, Comparative A, are prepared according to the procedure for Example 4.1, except that Example 3.1 and water #2 are replaced with the amounts of aqueous polymer compositions and water #2 shown in Table 4.2. Examples 4.1 to 4.5 and Comparative B have a VOC content of 8.5 weight %.

Table 4.2 -

| Preparation of Aqueous Pigmented Coating Compositions of Examples 4.2 to 4.5 and Comparative B | | |
|---|---|---|
| Aqueous Pigmented Coating Composition | Aqueous polymer composition | Water #2 (g) |
| Example 4.2 | Example 3.2 (577.0 g) | 111.0 |
| Example 4.3 | Example 3.3 (546.07 g) | 122.0 |
| Example 4.4 | Example 3.4 (577.0 g) | 92.30 |
| Example 4.5 | Example 3.5 (569.86 g) | 99.20 |
| Comparative B | Comparative A (570.7 g) | 98.8 |

Dried film samples are prepared from the aqueous pigmented coating compositions of Examples 4.1 to 4.5 and comparative aqueous pigmented coating composition of Comparative B. The dry scrub resistances and the adhesion to alkyd substrate are measured for each dried film sample.

Table 4.3 -

| Properties of Dried Films Prepared Examples 4.1 to 4.5 and Comparative B | | |
|---|---|---|
| Aqueous Pigmented Coating Composition | Alkyd Adhesion | Scrub Resistance |
| Example 4.1 | 100 | 1655 |
| Example 4.2 | 100 | 1050 |
| Example 4.3 | 100 | 1341 |
| Example 4.4 | 100 | 948 |
| Example 4.5 | 100 | 876 |
| Comparative B | 0 | 900 |

The dried films that are prepared from Examples 4.1 to 4.5 contain comb copolymer having as polymerized units, ureido methacrylate as the select monomer. The dried film that is prepared from Comparative B contains a comb copolymer that did not include as a polymerized unit ureido methacrylate or another select monomer. The results in the Table 4.3 show the dried films containing the comb copolymer of this invention, as exemplified by Examples 4.1 to 4.5, have acceptable levels of alkyd adhesion. In contrast, the comparative dried film does not have an acceptable level of alkyd adhesion. The comb copolymers of the present invention that contain polymerized units of the aldehyde reactive group-containing monomer provide dried films with acceptable levels of adhesion to alkyd surfaces. The results in Table 4.3 also show that the dried films that are prepared from Examples 4.1 to 4.5 have acceptable levels of scrub resistance.

<u>Example 5 - Preparation of Dried Pigmented Coatings From the Aqueous polymer compositions Having Low VOC Levels</u>

Aqueous polymer compositions, which contain titanium dioxide pigment and have low VOC levels, are prepared according to the following formulation:

Table 5.1 -

| Preparation of Aqueous Pigmented Coating Composition of Example 5.1 | |
|---|---|
| Material | Example 5.1 Weight (g) |
| *Combine the following materials in a Cowles mixer* | |
| propylene glycol | 2.2 |
| Tamol™ 731 dispersant (25%) | 3.56 |
| Foamaster™ VL defoamer | 0.26 |
| Ti-Pure™ R-706 titanium dioxide | 52.23 |
| water #1 | 3.61 |
| *Add the following materials with low shear mixing* | |
| Example 3.12 | 138.3 |
| ammonia (28 %) | 0.8 |
| Acrysol™ RM-2020 NPR thickener | 6.25 |
| Acrysol™ RM-8W thickener | 0 |
| water #2 | 36.5 |
| Total | 243.71 |

Aqueous pigmented coating compositions, Examples 5.2 to 5.6 and comparative aqueous polymer composition, Comparative C, are prepared according to the procedure for Example 5.1, except that Example 3.13 and water #2 are replaced with the amounts of aqueous polymer compositions, thickeners, and water #2 shown in Table 5.2. Examples 5.1 to 5.6 and Comparative C have a VOC content of less than 1 weight %.

Table 5.2 -

| Preparation of Aqueous Pigmented Coating Compositions of Examples 5.2 to 5.6 | | | | |
|---|---|---|---|---|
| Aqueous Pigmented Coating Composition | Aqueous polymer composition | Acrysol™ RM-2020 NPR thickener (g) | Acrysol™ RM-8W thickener (g) | Water #2 (g) |
| Example 5.2 | Example 3.7 (138.3 g) | 6.75 | 0.3 | 36.25 |
| Example 5.3 | Example 3.11 (137.0 g) | 3.5 | - | 34.5 |
| Example 5.4 | Example 3.8 (135.8 g) | 6.2 | 0.5 | 32.0 |
| Example 5.5 | Example 3.9 (141.8 g) | 6.1 | 0.2 | 31.8 |
| Example 5.6 | Example 3.10 (138.0 g) | 6.1 | 0.2 | 32.0 |
| Comparative C | Comparative A (136.4 g) | 6.25 | 0 | 38.4 |

Dried film samples are prepared from the aqueous pigmented coating compositions of Examples 5.1 to 5.6 and comparative aqueous pigmented coating composition of Comparative C. The dry scrub resistances and the adhesion to alkyd substrate are measured for each dried film sample.

Table 5.3 -

| Properties of Dried Films Prepared Examples 5.1 to 5.6 and Comparative C | | |
|---|---|---|
| Aqueous Pigmented Coating Composition | Alkyd Adhesion | Scrub Resistance |
| Example 5.1 | 100 | 1040 |
| Example 5.2 | 100 | 1103 |

Table 5.3 - (continued)

| Properties of Dried Films Prepared Examples 5.1 to 5.6 and Comparative C | | |
|---|---|---|
| Aqueous Pigmented Coating Composition | Alkyd Adhesion | Scrub Resistance |
| Example 5.3 | 100 | 507 |
| Example 5.4 | 100 | 355 |
| Example 5.5 | 100 | 796 |
| Example 5.6 | 100 | 310 |
| Comparative B | 0 | 400 |

The dried films that are prepared from Examples 5.1 to 5.6 contain comb copolymer having as polymerized units, ureido methacrylate as the select monomer. The dried film that is prepared from Comparative C contains a comb copolymer that does not include as a polymerized unit ureido methacrylate or another select monomer. The results in the Table 5.3 show the dried films that are prepared from low VOC aqueous polymer compositions containing the comb copolymer of this invention, as exemplified by Examples 5.1 to 5.6, have acceptable levels of alkyd adhesion. In contrast, the comparative dried film does not have an acceptable level of alkyd adhesion. The comb copolymers of the present invention that contain polymerized units of the aldehyde reactive group-containing monomer provide dried films with acceptable levels of adhesion to alkyd surfaces. The results in Table 5.3 show that the dried films that are prepared from Examples 5.1 and 5.2 also have acceptable levels of scrub resistance.

Example 6 - Preparation of Dried Pigmented Coatings From the Aqueous polymer compositions

The following aqueous polymer compositions, which contained titanium dioxide pigment, were prepared according to the formulations in Table 6.1.

Table 6.1-

| Preparation of Aqueous polymer compositions of Examples 6.1 and 6.2 | | |
|---|---|---|
| Material | Example 6.1 Weight (g) | Example 6.2 Weight (g) |
| *Combined the following materials in a Cowles mixer* | | |
| propylene glycol | 62.50 | 62.24 |
| Tamol™ 731 dispersant (25%) | 14.21 | 14.21 |
| Foamaster™ 111 defoamer | 1.04 | 1.04 |
| Kathon™ LX biocide (1.4%) | 1.88 | 1.88 |
| Ti-Pure™ R-706 titanium dioxide | 208.37 | 208.33 |
| water | 12.48 | 12.48 |
| *Added the following materials with low shear mixing* | | |
| Example 3.1 | 583.8 | |
| Example 3.6 | | 551.88 |
| Texanol™ coalescent | 24.35 | 24.35 |
| Triton™ CF-10 surfactant | 1.22 | 1.22 |
| ammonia (28 %) | 3.6 | 3.4 |
| Acrysol™ RM-2020 NPR thickener | 25.0 | 25.0 |
| Acrysol™ RM-8W thickener | 2.0 | 2.0 |
| water | 86.7 | 116.3 |

Table 6.1- (continued)

| Preparation of Aqueous polymer compositions of Examples 6.1 and 6.2 | | |
|---|---|---|
| Material | Example 6.1 Weight (g) | Example 6.2 Weight (g) |
| *Combined the following materials in a Cowles mixer* | | |
| Total | 1026.2 | 1024.3 |
| ACRYSOL, RHOPLEX, and TAMOL are trademarks of Rohm and Haas Company (Philadelphia). TEXANOL is a trademark of Eastman Chemical Co. Triton is a tradename of Dow-Carbide. Foamaster is a tradename of Cognis Corporation. Ti-Pure is a trademark of E.I. DuPont de Nemours. Co. | | |

Dried films of the aqueous polymer compositions of Examples 6.1 and 6.2 were prepared and tested for scrub resistance.

Table 6.2 -

| Scrub Resistance of Dried Films Prepared from Examples 6.1 and 6.2 | | | |
|---|---|---|---|
| Aqueous polymer composition | Backbone Tg (°C) | Macromonomer Level (%) | Scrub Resistance |
| Example 6.1 | -26 | 10 | 1655 |
| Example 6.2 | -26 | 10 | 1938 |

The results in Table 6.2 show that the dried film prepared from the aqueous polymer composition of Example 6.2, which contained vinyl toluene as a polymerized unit, had improved scrub resistance compared to the dried film prepared from the aqueous polymer composition of Example 6.1, which did not contain vinyl toluene as a polymerized unit. Vinyl toluene is a styrenic monomer having a para-methyl group.

## Claims

**1.** An aqueous polymer composition comprising a plurality of comb copolymer particles:
wherein said comb copolymer particles comprise comb copolymer;
wherein said comb copolymer comprises, based on weight of said comb copolymer:

a) from 75 to 98 weight % of a polymer backbone having a glass transition temperature in the range of from -65 °C to 30 °C; and
b) from 2 to 25 weight % of at least one graft segment having a glass transition temperature of at least 40 °C attached thereto;

and wherein said comb copolymer comprises as a polymerized unit at least one select monomer selected from the group consisting of aldehyde reactive group-containing monomer; styrenic monomer having at least one ortho-, meta-, or para-alkyl group; and combinations thereof.

**2.** The aqueous polymer composition according to claim 1 wherein said polymer backbone comprises as polymerized units from 0.25 to 10 weight % of said aldehyde reactive group-containing monomer, based on the weight of said comb copolymer.

**3.** The aqueous polymer composition according to claim 1 wherein said polymer backbone comprises as polymerized units from 0.5 to 20 weight % of said styrenic monomer having at least one ortho-, meta-, or para-alkyl group, based on weight of said comb copolymer.

**4.** The aqueous polymer composition according to claim 1 comprising less than 5 weight % volatile organic compounds, based on weight of said aqueous polymer composition.

**5.** A process for preparing an aqueous polymer composition comprising particles of comb copolymer, comprising the steps of:

a) providing an aqueous macromonomer emulsion comprising macromonomer dispersed an aqueous medium, wherein said macromonomer has a glass transition temperature of at least 40 °C;
b) polymerizing said macromonomer in the presence of at least one first ethylenically unsaturated monomer and at least one select monomer selected from the group consisting of aldehyde reactive group-containing monomer, styrenic monomer having at least one ortho-, meta-, or para-alkyl group, and combinations thereof, to provide said particles of said comb copolymer;

wherein said comb copolymer comprises as polymerized units, based on weight of said comb copolymer:

a) from 2 to 25 weight % of said macromonomer; and
b) from 75 to 98 weight % of said at least one first ethylenically unsaturated monomer and said at least one select monomer, wherein a polymer comprising as polymerized units said at least one first ethylenically unsaturated monomer and said at least one select monomer has a glass transition temperature in the range of from -65 °C to 30 °C.

**6.** An aqueous polymer composition comprising a plurality of comb copolymer particles:
wherein said comb copolymer particles comprise comb copolymer;
wherein said comb copolymer comprises, based on weight of said comb copolymer:

a) from 80 to 99.75 weight % of a polymer backbone having a glass transition temperature in the range of from -65 °C to 40 °C; and
b) from 0.25 to 20 weight % of at least one select graft segment attached thereto;

wherein said select graft segment comprises as polymerized units from 5 to 100 weight % aldehyde reactive group-containing monomer, based on weight of said select graft segment.

**7.** A process for preparing an aqueous polymer composition comprising particles of comb copolymer, comprising the steps of:

a) providing an aqueous macromonomer emulsion comprising macromonomer dispersed an aqueous medium, wherein said macromonomer comprises as polymerized units from 5 to 100 weight % aldehyde reactive group-containing monomer, based on weight of said macromonomer;
b) polymerizing said macromonomer in the presence of at least one first ethylenically unsaturated monomer and optionally, at least one select monomer selected from the group consisting of aldehyde reactive group-containing monomer, styrenic monomer having at least one ortho-, meta-, or para-alkyl group, and combinations thereof, to provide said particles of said comb copolymer;

wherein said comb copolymer comprises as polymerized units, based on weight of said comb copolymer:

a) from 0.25 to 20 weight % of said macromonomer; and
b) from 80 to 99.75 weight % of said at least one first ethylenically unsaturated monomer and optionally, said at least one select monomer; wherein a polymer comprising said at least one select monomer and optionally, said at least one select monomer, has a glass transition temperature in the range of from -65 °C to 30 °C.

**8.** A method for forming a coated substrate comprising the steps of:

a) providing an aqueous polymer composition comprising particles of comb copolymer dispersed in an aqueous medium;
wherein said comb copolymer comprises, based on weight of said comb copolymer:

i) from 75 to 98 weight % of a polymer backbone having a glass transition temperature in the range of from -65 °C to 30 °C; and
ii) from 2 to 25 weight % of at least one graft segment having a glass transition temperature of at least 40 °C attached thereto;

and wherein said comb copolymer comprises as a polymerized unit at least one select monomer selected from the group consisting of aldehyde reactive group-containing monomer; styrenic monomer having at least one ortho-, meta-, or para-alkyl group; and combinations thereof;

b) applying said aqueous polymer composition onto a substrate; and
c) drying or allowing to dry said aqueous polymer composition applied onto said substrate to provide said coated substrate.

**9.** The method according to claim 8 wherein said aqueous polymer composition comprises less than 5 weight % volatile organic compounds, based on weight of said aqueous polymer composition.

European Patent Office

# EUROPEAN SEARCH REPORT

Application Number
EP 04 25 2230

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/054996 A1 (RHEENEN PAUL RALPH VAN) 9 May 2002 (2002-05-09) * paragraphs [0104], [0149]; examples * | 1-9 | C08F290/04 C09D151/00 |
| X | US 6 472 463 B1 (MA SHEAU-HWA) 29 October 2002 (2002-10-29) * examples 1,2,4,6,7 * | 1,2 | |
| X | US 5 929 173 A (MIDHA SANJEEV ET AL) 27 July 1999 (1999-07-27) * column 3, line 56, paragraph 67 * | 1 | |
| X | US 5 852 123 A (HUYBRECHTS JOZEF) 22 December 1998 (1998-12-22) * example 8 * | 1,2 | |
| A | US 5 955 532 A (CHANG DAVID C K ET AL) 21 September 1999 (1999-09-21) * the whole document * | 1 | |
| A | EP 0 870 809 A (FUJI PHOTO FILM CO LTD) 14 October 1998 (1998-10-14) * examples * | 1 | TECHNICAL FIELDS SEARCHED (Int.Cl.7) C08F C09D |
| A | US 6 239 214 B1 (DE MARRE ANNE ET AL) 29 May 2001 (2001-05-29) * examples * | 1,2,6 | |

The present search report has been drawn up for all claims

| Place of search | Date of completion of the search | Examiner |
|---|---|---|
| The Hague | 9 August 2004 | Meulemans, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 25 2230

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2004

| Patent document cited in search report | Publication date | Patent family member(s) | Publication date |
|---|---|---|---|
| US 2002054996 A1 | 09-05-2002 | US 2004126551 A1 | 01-07-2004 |
| | | AU 9094301 A | 26-03-2002 |
| | | AU 9097201 A | 26-03-2002 |
| | | AU 9097601 A | 26-03-2002 |
| | | AU 9097701 A | 26-03-2002 |
| | | AU 9097801 A | 26-03-2002 |
| | | AU 9097901 A | 26-03-2002 |
| | | AU 9098001 A | 26-03-2002 |
| | | AU 9267601 A | 26-03-2002 |
| | | AU 9267701 A | 26-03-2002 |
| | | CN 1457348 T | 19-11-2003 |
| | | CN 1457347 T | 19-11-2003 |
| | | CN 1457354 T | 19-11-2003 |
| | | CN 1458970 T | 26-11-2003 |
| | | CN 1458969 T | 26-11-2003 |
| | | CN 1458961 T | 26-11-2003 |
| | | CN 1458964 T | 26-11-2003 |
| | | CN 1458959 T | 26-11-2003 |
| | | CN 1458944 T | 26-11-2003 |
| | | EP 1317494 A2 | 11-06-2003 |
| | | EP 1319042 A2 | 18-06-2003 |
| | | EP 1317516 A2 | 11-06-2003 |
| | | EP 1319053 A2 | 18-06-2003 |
| | | EP 1317518 A2 | 11-06-2003 |
| | | EP 1317509 A2 | 11-06-2003 |
| | | EP 1317504 A2 | 11-06-2003 |
| | | EP 1317510 A2 | 11-06-2003 |
| | | EP 1317505 A2 | 11-06-2003 |
| | | JP 2004509182 T | 25-03-2004 |
| | | JP 2004509183 T | 25-03-2004 |
| | | JP 2004509184 T | 25-03-2004 |
| | | JP 2004509194 T | 25-03-2004 |
| | | JP 2004509195 T | 25-03-2004 |
| | | JP 2004509203 T | 25-03-2004 |
| | | JP 2004509211 T | 25-03-2004 |
| | | JP 2004509213 T | 25-03-2004 |
| | | JP 2004509214 T | 25-03-2004 |
| | | TW 523538 B | 11-03-2003 |
| | | WO 0222689 A2 | 21-03-2002 |
| | | WO 0222734 A2 | 21-03-2002 |
| | | WO 0222750 A2 | 21-03-2002 |
| | | WO 0222755 A2 | 21-03-2002 |
| | | WO 0222754 A2 | 21-03-2002 |
| | | WO 0222715 A2 | 21-03-2002 |
| | | WO 0222716 A2 | 21-03-2002 |
| | | WO 0222690 A2 | 21-03-2002 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 04 25 2230

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2004

| Patent document cited in search report | Publication date | Patent family member(s) | Publication date |
|---|---|---|---|
| US 2002054996 A1 | | WO 0222691 A2 | 21-03-2002 |
| | | US 2004024144 A1 | 05-02-2004 |
| | | US 2004110900 A1 | 10-06-2004 |
| US 6472463 B1 | 29-10-2002 | AU 770496 B2 | 26-02-2004 |
| | | AU 2435501 A | 25-06-2001 |
| | | BR 0016769 A | 03-09-2002 |
| | | CA 2389352 A1 | 21-06-2001 |
| | | CN 1409733 T | 09-04-2003 |
| | | EP 1242491 A1 | 25-09-2002 |
| | | JP 2003517065 T | 20-05-2003 |
| | | WO 0144332 A1 | 21-06-2001 |
| US 5929173 A | 27-07-1999 | AU 7071398 A | 08-12-1998 |
| | | BR 9809792 A | 27-06-2000 |
| | | CN 1259979 T | 12-07-2000 |
| | | EP 0981588 A1 | 01-03-2000 |
| | | WO 9851755 A1 | 19-11-1998 |
| | | JP 3300371 B2 | 08-07-2002 |
| | | JP 2001507398 T | 05-06-2001 |
| | | ZA 9803965 A | 09-02-1999 |
| US 5852123 A | 22-12-1998 | WO 0020476 A1 | 13-04-2000 |
| | | AU 9792498 A | 26-04-2000 |
| | | BR 9816057 A | 12-06-2001 |
| | | CA 2342240 A1 | 13-04-2000 |
| | | EP 1123331 A1 | 16-08-2001 |
| | | JP 2002526614 T | 20-08-2002 |
| US 5955532 A | 21-09-1999 | AU 739264 B2 | 11-10-2001 |
| | | AU 8486798 A | 10-02-1999 |
| | | BR 9810601 A | 11-07-2000 |
| | | CA 2296706 A1 | 28-01-1999 |
| | | CN 1264412 T | 23-08-2000 |
| | | DE 69808768 D1 | 21-11-2002 |
| | | DE 69808768 T2 | 24-07-2003 |
| | | EP 0996688 A1 | 03-05-2000 |
| | | JP 2002510352 T | 02-04-2002 |
| | | WO 9903937 A1 | 28-01-1999 |
| EP 0870809 A | 14-10-1998 | JP 10339949 A | 22-12-1998 |
| | | EP 0870809 A2 | 14-10-1998 |
| | | US 6194480 B1 | 27-02-2001 |
| | | US 2001002415 A1 | 31-05-2001 |
| US 6239214 B1 | 29-05-2001 | AU 736750 B2 | 02-08-2001 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 04 25 2230

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2004

| Patent document cited in search report | Publication date | Patent family member(s) | Publication date |
|---|---|---|---|
| US 6239214 B1 | | AU 8570098 A | 10-02-1999 |
| | | BR 9815498 A | 16-01-2001 |
| | | CA 2296297 A1 | 28-01-1999 |
| | | CN 1140553 C | 03-03-2004 |
| | | DE 69810113 D1 | 23-01-2003 |
| | | DE 69810113 T2 | 24-04-2003 |
| | | EP 0996652 A1 | 03-05-2000 |
| | | JP 2001510214 T | 31-07-2001 |
| | | TW 518343 B | 21-01-2003 |
| | | WO 9903905 A1 | 28-01-1999 |

EPO FORM P0459

For more details about this annex : see Official Journal of the European Patent Office, No. 12/82